(19) Europäisches Patentamt / European Patent Office / Office européen des brevets

(11) **EP 4 176 165 B1**

(12) **FASCICULE DE BREVET EUROPEEN**

(45) Date de publication et mention
de la délivrance du brevet:
**31.07.2024 Bulletin 2024/31**

(21) Numéro de dépôt: **21737428.9**

(22) Date de dépôt: **29.06.2021**

(51) Classification Internationale des Brevets (IPC):
**F01N 9/00** *(2006.01)* **F02D 41/00** *(2006.01)*
**F02D 41/14** *(2006.01)*

(52) Classification Coopérative des Brevets (CPC):
**F01N 9/00; F02D 41/0072; F02D 41/1405;**
F01N 2900/0404; F01N 2900/0408; F01N 2900/08;
F02D 2041/1417; F02D 2041/1433; Y02T 10/12;
Y02T 10/40

(86) Numéro de dépôt international:
**PCT/EP2021/067766**

(87) Numéro de publication internationale:
**WO 2022/008290 (13.01.2022 Gazette 2022/02)**

(54) **PROCÉDÉ DE GESTION D'UN MOTEUR À COMBUSTION INTERNE POUR UN VÉHICULE AUTOMOBILE**

VERFAHREN ZUR VERWALTUNG EINES VERBRENNUNGSMOTORS FÜR EIN KRAFTFAHRZEUG

METHOD FOR MANAGING AN INTERNAL COMBUSTION ENGINE FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2020 FR 2007142**

(43) Date de publication de la demande:
**10.05.2023 Bulletin 2023/19**

(73) Titulaires:
- **RENAULT s.a.s.**
  **92100 Boulogne-Billancourt (FR)**
- **NISSAN MOTOR CO., LTD.**
  **Kanagawa 221-0023 (JP)**

(72) Inventeurs:
- **BABUM, Suresh**
  **Hyderabad, 500049 (IN)**
- **STROE, Nicoleta-Alexandra**
  **91510 Lardy (FR)**
- **TALON, Vincent**
  **69230 Saint genis Laval (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**FR-A1- 3 085 432**     **US-A- 5 781 700**
**US-A1- 2012 117 011**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## Domaine technique

La présente invention concerne un procédé de gestion d'un moteur à combustion interne pour un véhicule automobile, ainsi qu'un dispositif de gestion pour la mise en oeuvre de ce procédé de gestion, un moteur à combustion interne comportant ledit dispositif et un véhicule automobile comprenant un tel moteur à combustion interne.

## Technique antérieure

Afin d'améliorer la performance globale d'un moteur à combustion interne, il est bien connu de pourvoir un tel moteur à combustion interne avec une vanne EGR (pour « Exhaut Gaz Recirculation en anglais »). Une telle vanne EGR permet une recirculation de gaz brulés d'une conduite d'échappement dudit moteur à combustion interne vers un collecteur d'admission de ce même moteur à combustion interne. L'introduction, à l'intérieur des chambres de combustion du moteur, de gaz brulés, qui ne réagissent pas lors de la combustion, permet de diminuer la température globale de combustion et de limiter l'apparition d'un phénomène de cliquetis. Un tel phénomène correspond à une auto-inflammation non désirée du mélange air/carburant dans la chambre de combustion qui peut à terme détériorer fortement ladite chambre de combustion.

L'utilisation d'une vanne EGR a une influence importante sur le fonctionnement global du moteur à combustion interne. En effet, la masse d'air emprisonnée dans chaque chambre de combustion est moins importante dans une configuration avec une vanne EGR, puisque des gaz brûlés prennent la place d'air frais dans ladite chambre. Pour avoir un mélange air/carburant stoechiométrique, c'est-à-dire un mélange dans lequel le carburant sera entièrement consommé lors de la combustion dans la chambre, il est nécessaire de connaître avec une grande précision la fraction massique de gaz brulés (ou la fraction massique de gaz frais) dans le collecteur d'admission du moteur à combustion interne. Par fraction massique de gaz brulés, on entend la proportion de gaz brulés dans le mélange air/carburant. Ce paramètre est ensuite utilisé pour piloter au mieux la vanne EGR. Or la fraction massique de gaz brulés est difficilement mesurable par un capteur physique traditionnel.

Le document FR2981404 décrit un procédé de gestion d'un moteur à combustion interne à partir d'une estimation de la fraction massique de gaz brulés dans le collecteur d'admission. Plus particulièrement, la fraction massique de gaz brulés est déterminée à partir d'une estimation massique de gaz brulés présente dans un volume de mélange en amont du collecteur d'admission et à partir d'un retard de transport. Le retard de transport correspond au temps de trajet du volume de mélange jusqu'au collecteur d'admission. Cela correspond à une dynamique de transvasement du mélange air/carburant à l'intérieur du moteur à combustion interne. Ce retard de transport est estimé en segmentant la ligne d'admission selon les conditions thermodynamiques et en appliquant sur chaque segment une loi d'écoulement laminaire. Ainsi, le document FR2981404 fait l'hypothèse que les conditions thermodynamiques au sein de chaque zone sont stables ou qu'elles varient linéairement. Or, un moteur à combustion interne peut être comparé à un système non-linéaire dans lequel les paramètres de sortie ne sont pas proportionnels aux paramètres d'entrée. Ainsi, l'estimation de la fraction massique de gaz brulés du document FR2981404 comporte une certaine imprécision qui peut être incompatible avec les futures normes européennes d'émission pour les moteurs à essence, par exemple la future norme Euro 7. Un autre document de l'art antérieur est le document US5781700A.

Il existe donc un besoin de proposer un procédé de gestion d'un moteur à combustion interne pour un véhicule automobile qui soit plus performant, notamment en déterminant avec une plus grande précision la fraction massique de gaz brulés dans le collecteur d'admission dudit moteur à combustion interne.

## Exposé de l'invention

La présente invention vise à remédier au moins en partie à ce besoin.

Plus particulièrement, la présente invention vise à améliorer l'estimation de la fraction massique de gaz brulés dans un collecteur d'admission d'un moteur à combustion interne.

Un premier objet de l'invention concerne un procédé de gestion d'un moteur à combustion interne pour un véhicule automobile, ledit moteur à combustion interne comportant une pluralité d'organes tels qu'un collecteur d'admission, au moins une chambre de combustion, une vanne EGR, ledit procédé de pilotage comportant :

- une étape de réception d'une pluralité de premiers paramètres de fonctionnement dudit moteur à combustion interne et d'un premier paramètre de référence dit paramètre de référence mesuré ;
- à partir de tout ou partie de la pluralité de premiers paramètres de fonctionnement, une étape d'estimation par un réseau de neurones d'au moins un second paramètre de fonctionnement dudit moteur à combustion interne et d'un second paramètre de référence, dit paramètre de référence estimé ;
- une étape de correction par un filtre de Kalman étendu du au moins second paramètre de fonctionnement pour obtenir au moins un second paramètre de fonctionnement corrigé, ladite étape de correction comprenant une comparaison entre le paramètre de référence mesuré et le paramètre de référence estimé pour déterminer un gain de correction, la correction du au moins second paramètre de fonctionnement étant fonction dudit gain de correction ;

- à partir du au moins second paramètre de fonctionnement corrigé :

  - une étape de pilotage d'au moins un organe de la pluralité d'organes du moteur à combustion interne tel qu'une vanne d'admission à l'entrée du collecteur d'admission et/ou ladite vanne EGR ; et/ou
  - une étape d'estimation d'au moins un troisième paramètre de fonctionnement tel qu'un niveau d'émission de polluants ou une température des gaz en sortie de la chambre de combustion.

Ainsi, l'estimation de la fraction massique de gaz brulés dans le collecteur d'admission est réalisée par un réseau de neurones. Par définition, un réseau de neurones est une architecture dont la conception est inspirée du fonctionnement des neurones biologiques. C'est une architecture capable d'apprendre en mettant en oeuvre le principe de l'induction, c'est-à-dire l'apprentissage par l'expérience. Un réseau de neurones est en général composé d'une succession de couches dont chacune prend ses entrées sur les sorties de la précédente. Chaque couche (i) est composée de Ni neurones prenant ainsi leurs entrées sur les $N_{i-1}$ neurones de la couche précédente. Par un apprentissage adéquat, le réseau de neurones va être capable de généraliser le fonctionnement non-linéaire du moteur à combustion interne pour en extraire un fonctionnement linéarisé. Un filtre de Kalman étendu est un filtre à réponse impulsionnelle infinie qui permet de corriger des erreurs de mesures incomplètes ou bruités. C'est un filtre dont le fonctionnement est optimal sur des plages de valeurs d'un système non linéaire apparaissant comme étant linéaires. Le filtre de Kalman étendu est donc particulièrement adapté aux paramètres estimés par le réseau de neurones. Ce filtre effectue une correction de tout ou partie des paramètres estimés par le réseau de neurones à l'aide d'un gain de correction. Ce gain de correction est déterminé par la comparaison entre un paramètre de référence mesuré et un paramètre de référence estimé par le réseau de neurones. Pour déterminer ce gain de correction, le filtre de Kalman étendu effectue un rebouclage sur un paramètre maîtrisé adapté à être mesuré par un capteur physique, tel qu'une pression dans le collecteur d'admission. Par l'utilisation combinée du réseau de neurones et du filtre de Kalman étendu, on améliore l'estimation de la fraction massique de gaz brulés dans le collecteur d'admission et plus globalement la gestion du moteur à combustion interne. L'invention permet ainsi d'atteindre des niveaux de précision dans l'estimation de la fraction massique de gaz brulés de +/- deux points (contre +/- cinq points dans l'art antérieur).

Dans un mode de réalisation particulier, le réseau de neurones est un réseau de neurones récursifs.

Un réseau de neurones récursifs est un réseau de neurones qui possède d'excellentes propriétés de compression de l'information. Il est ainsi capable de stocker une longue liste de valeurs antérieures prises pour un paramètre donné et d'en capturer des phénomènes dynamiques permettant d'en estimer les valeurs futures.

Dans un mode de réalisation particulier, le réseau de neurones récursifs comprend une couche de mémoire à court terme.

La couche de mémoire à court terme (dite LSTM pour « Long short-term memory » en anglais) est une architecture particulière de neurones utilisée notamment dans le domaine de l'apprentissage en profondeur (dit « deep learning » en anglais). C'est une architecture qui est classiquement utilisée dans les régressions ou les classifications de séries temporelles (telles que la parole ou la vidéo). Typiquement, une couche de mémoire à court terme comprend une pluralité d'unités (dite « feature » en anglais). Chaque unité comprend des sous-éléments comme une ou plusieurs portes d'entrée, une ou plusieurs portes de sortie et une ou plusieurs portes d'oubli. Avec ces différentes portes, la couche de mémoire à court terme permet de capter au mieux les effets dynamiques du retard de transport de l'air jusqu'au collecteur d'admission du moteur à combustion interne. Plus précisément, la couche de mémoire à court terme se définit par un nombre d'états internes X dynamique (variable). Cette couche LSTM permet alors de capturer les phénomènes dynamiques non linéaires du moteur. Ces phénomènes sont responsables en grande partie de la production de polluants.

Dans un mode de réalisation particulier, le réseau de neurones comprend au moins une couche pleinement connectée reliée à ladite couche de mémoire à court terme.

Une couche pleinement connectée (dite « Fully-connected layer » en anglais) d'un réseau de neurones est une couche comprenant une pluralité de neurones qui sont chacun connectés à des neurones d'une couche précédente, c'est-à-dire ici la couche de mémoire à court terme. Cela permet de créer une multitude de liaisons sur lesquels il est possible d'appliquer des pondérations à calibrer pour capter au mieux le fonctionnement du moteur à combustion interne. Ces multitudes de liaisons permettent ainsi de capturer au mieux les non-linéarités du fonctionnement dudit moteur à combustion interne pour en extraire un fonctionnement linéarisé.

Dans un autre mode de réalisation particulier, les premiers paramètres de fonctionnement sont choisis parmi une première liste de paramètres de fonctionnement comprenant :

- un régime du moteur à combustion interne ;
- une quantité de carburant injecté dans ledit moteur à combustion interne ;
- une position d'un papillon d'admission d'air frais ;
- une position de la vanne EGR ;
- une position de la vanne d'admission à l'entrée du collecteur d'admission ;
- une position d'ailettes dans une turbine d'un turbocompresseur.

Il est ainsi possible d'introduire en entrée du réseau de neurones un ensemble de paramètres caractéristiques du fonctionnement du moteur à combustion interne, chacun de ces paramètres étant mesurable par un capteur physique dans ledit moteur à combustion interne.

Dans un autre mode de réalisation, le au moins un second paramètre de fonctionnement est choisi parmi une seconde liste de paramètres de fonctionnement comprenant :

- une pression dans le collecteur d'admission ;
- une température dans ledit collecteur d'admission ;
- une fraction massique de gaz brulés ou une fraction massique de gaz frais dans ledit collecteur d'admission ;
- un débit d'air frais ;
- un débit dans la vanne EGR ;
- une pression dans un collecteur d'échappement ;
- une température dans ledit collecteur d'échappement ;
- une pression dans un volume dans une conduite avant un compresseur du turbocompresseur ;
- une fraction massique de gaz brulés dans ledit volume avant le compresseur dudit turbocompresseur.

Il est ainsi possible d'obtenir en sortie du réseau de neurones un autre ensemble de paramètres. Les paramètres de cet autre ensemble sont estimés. En effet, ces paramètres sont difficilement mesurables par des capteurs physiques classiques dans le moteur à combustion interne.

Dans un autre mode de réalisation, le premier paramètre de référence est une pression mesurée dans le collecteur d'admission et le second paramètre de référence est une pression estimée dans ledit collecteur d'admission.

Ainsi à partir de la pression mesurée ou estimée dans le collecteur d'admission, il est possible de déterminer un gain de correction dans l'étape de correction du procédé de gestion.

Un autre objet de l'invention concerne un dispositif de gestion d'un moteur à combustion interne pour un véhicule automobile, ledit moteur à combustion interne comportant une pluralité d'organes tels qu'un collecteur d'admission, au moins un chambre de combustion, une vanne EGR, ledit dispositif de gestion comportant :

- des moyens de réception d'une pluralité de premiers paramètres de fonctionnement dudit moteur à combustion interne et d'un premier paramètre de référence dit paramètre de référence mesuré ;
- un réseau de neurones pour estimer, à partir de tout ou partie de la pluralité de premiers paramètres de fonctionnement, au moins un second paramètre de fonctionnement dudit moteur à combustion interne et un second paramètre de référence, dit paramètre de référence estimé ;
- un filtre de Kalman étendu pour corriger le au moins second paramètre de fonctionnement en vue d'obtenir au moins un second paramètre de fonctionnement corrigé, ledit filtre étant adapté pour faire une comparaison entre le paramètre de référence mesuré et le paramètre de référence estimé en vue de déterminer un gain de correction, la correction du au moins second paramètre de fonctionnement étant fonction dudit gain de correction ;
- des moyens de pilotage d'au moins un organe de la pluralité d'organes du moteur à combustion interne tel que ladite vanne d'admission à l'entrée du collecteur d'admission et/ou ladite vanne EGR, à partir du au moins second paramètre de fonctionnement corrigé ; et/ou
- des moyens d'estimation d'au moins un troisième paramètre de fonctionnement tel qu'un niveau d'émission de polluants ou une température des gaz en sortie de la chambre de combustion, à partir du au moins second paramètre de fonctionnement corrigé.

Le traitement d'un système fonctionnant de manière non linéaire, tel que le fonctionnement d'un moteur à combustion interne, est peu contraignant en matière de puissance de calcul. En outre, les réseaux de neurones ont d'excellentes propriétés de compression de l'information, donc une empreinte mémoire très faible. Dès lors, le dispositif de gestion d'un moteur à combustion interne, embarquant un tel réseau de neurones et un filtre de Kalman étendu, est simplifié et son encombrement dans le véhicule automobile est limité. En outre, le filtre de Kalman étendu permet de prendre des modèles non linéaires car son algorithme les linéarise à chaque pas de calcul. Cette linéarisation du réseau de neurones est améliorée lorsque le réseau de neurones est un réseau de neurones récursifs. Dans un mode de réalisation particulier, le réseau de neurones récursifs comprend une couche de mémoire à court terme LSTM. Avantageusement, le réseau de neurones récursifs comprend également au moins une couche pleinement connectée reliée à ladite couche de mémoire à court terme. L'association d'une couche de mémoire à court terme et d'au moins une couche pleinement connectée forme un modèle de réseau de neurones non linéaire qu'il est alors possible de linéariser par le filtre de Kalman étendu. La linéarisation d'un tel réseau de neurones est possible grâce aux propriétés des fonctions d'activation retenues dans la couche de mémoire à court terme LSTM et dans la au moins une couche pleinement connectée.

Un autre objet de l'invention concerne un moteur à combustion interne comportant une vanne EGR et un dispositif de gestion dudit moteur à combustion interne selon l'autre objet de l'invention précédent.

Dans un autre mode de réalisation, le moteur à combustion interne est un moteur à essence, notamment compatible avec les normes européennes d'émission à partir d'Euro 7.

Dans un autre mode de réalisation, la vanne EGR du moteur à combustion interne est une vanne EGR basse pression.

Un autre objet de l'invention concerne un véhicule automobile comprenant un moteur à combustion interne selon un des objets précédents.

La présente invention sera mieux comprise à la lecture de la description détaillée de modes de réalisation pris à titre d'exemples nullement limitatifs et illustrés par les dessins annexés sur lesquels :

**[Fig 1]** la figure 1 est une vue schématique d'un moteur à combustion interne selon l'invention ;

**[Fig 2]** la figure 2 est une vue schématique d'un dispositif de gestion du moteur à combustion interne de la figure 1 ;

**[Fig 3]** la figure 3 décrit les étapes d'un procédé de gestion du moteur à combustion interne de la figure 1 mise en oeuvre par le dispositif de gestion de la figure 2.

Sur les différentes figures, les éléments identiques ou similaires portent les mêmes références.

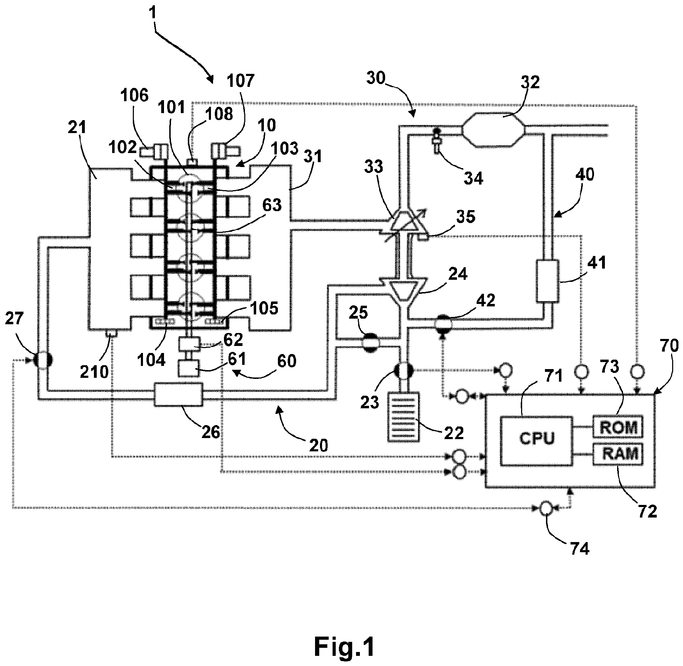

La figure 1 représente schématiquement un moteur à combustion interne 1 selon l'invention.

Dans la description, les termes « amont » et « aval » seront utilisés suivant le sens de l'écoulement des gaz dans ce moteur, depuis le point de prélèvement de l'air frais jusqu'à la sortie des gaz brûlés hors du véhicule automobile.

Sur la figure 1, on a plus précisément représenté un moteur à combustion interne 1 de véhicule automobile, qui comprend un bloc-moteur 10 pourvu ici de quatre chambres de combustion 101. Chaque chambre de combustion 101 est associée à deux soupapes d'entrée 102 et deux soupapes de sortie 103. Les soupapes d'entrée 102 et les soupapes de sortie 103 gèrent l'entrée de l'air et la sortie des gaz brûlés. Ces soupapes 102, 103 sont respectivement reliées à un premier vilebrequin 104 et à un second vilebrequin 105 destinés à gérer le mouvement de va-et-vient desdites soupapes 102, 103 dans les chambres de combustion 101. On notera également que chaque vilebrequin 104, 105 est relié respectivement à un système de levée variable des soupapes en admission 106 et à un système de levée variable des soupapes en échappement 107. Le moteur à combustion interne 1 comprend également un capteur 108 de régime de ce moteur à combustion interne. Ce capteur 108 est adapté à transmettre une information du régime Rm dudit moteur à combustion interne 1.

Ce moteur est ici à allumage commandé (Essence).

En amont des chambres de combustion 101, le moteur à combustion interne 1 comporte une ligne d'admission 20 qui prélève l'air frais dans l'atmosphère et qui débouche dans un collecteur d'admission 21 agencé pour répartir les gaz d'admission vers chacune des quatre chambres de combustion 101 du bloc-moteur 10. Le collecteur d'admission 21 comprend un capteur d'admission 210 adapté pour délivrer une information sur une pression $P_{Col\,mes}$ mesurée dans le collecteur d'admission 21.

Cette ligne d'admission 20 comporte, dans le sens d'écoulement des gaz, un filtre à air 22 qui filtre l'air frais prélevé dans l'atmosphère, un papillon d'admission d'air frais 23 qui permet de réguler le débit d'air frais dans la ligne d'admission 20, un compresseur 24 qui comprime les gaz, un capteur de pression de suralimentation 25 adapté pour mesurer la pression d'admission d'air afin d'ajuster la quantité de carburant injecté dans les chambres de combustion 101, un refroidisseur d'air principal 26 qui refroidit les gaz comprimés par le compresseur 24, une vanne d'admission 27 ou vanne haute pression qui permet d'alimenter en air le collecteur d'admission 21. Le papillon d'admission d'air frais 23 est adapté pour délivrer une information sur une position $\alpha$ dudit papillon 23. La vanne d'admission 27 est adaptée pour délivrer une information sur une position $\delta$ de ladite vanne d'admission 27.

En sortie des chambres de combustion 101, le moteur à combustion interne 1 comporte une ligne d'échappement 30 qui s'étend depuis un collecteur d'échappement 31 dans lequel débouchent les gaz qui ont été préalablement brûlés dans les chambres de combustion 101, jusqu'à un filtre à particule 32 qui permet de filtrer les particules des gaz brûlés avant leur envoi dans l'atmosphère.

Cette ligne d'échappement 30 comporte, dans le sens d'écoulement des gaz brûlés, une turbine 33 qui est entraînée en rotation par le flux de gaz brûlés sortant du collecteur d'échappement 31 et une sonde large bande UEGO (pour « Universel Exhaust Gas Oxygen ») 34 qui permet de contrôler la qualité de la combustion et notamment s'il reste du carburant dans les gaz brûlés en sortie des chambres de combustion 101.

La turbine 33 est ici couplée au compresseur 24 par des moyens de couplage mécanique tels qu'un arbre de transmission, si bien que le compresseur 24 et la turbine 33 forment ensemble un turbocompresseur.

La turbine 33 présente ici une géométrie variable en ce sens qu'elle comporte des ailettes montées mobiles en pivotement autour de leurs axes longitudinaux afin de présenter un pas variable. Le pas de ces ailettes est ici réglé en continu par un actionneur 35, tel qu'un moteur électrique pas-à-pas, ce qui permet d'entraîner le compresseur 24 à une vitesse de rotation plus ou moins importante. L'actionneur 35 est également adapté pour délivrer une information sur une position $\varepsilon$ d'ailettes dans la turbine 33.

Le moteur à combustion interne 1 comporte en outre une ligne de recirculation basse pression 40 des gaz brûlés. Cette ligne de recirculation est communément appelée ligne EGR-LP 40 (pour « Exhaust Gaz Recirculation Low Pression » en anglais). Cette ligne de recirculation 40 prend naissance dans la ligne d'échappement 30 après le filtre à particules 32 et elle débouche dans la ligne d'admission 20 entre le papillon d'admission d'air frais 23 et le compresseur 24. Cette ligne EGR-LP 40 permet de prélever une partie des gaz brûlés circulant dans la ligne d'échappement 30 pour la réinjecter dans les chambres de combustion 101 afin de réduire les émissions polluantes du moteur, en particulier les émissions d'oxydes d'azote.

Cette ligne EGR-BP 40 comporte un refroidisseur d'air secondaire 41 pour refroidir la partie des gaz brûlés déviée, une vanne EGR basse pression 42 pour réguler le débit de gaz brûlés débouchant dans le collecteur d'admission 21. La vanne EGR basse pression 42 est adaptée pour délivrer une information sur une position $\beta$ deladite vanne EGR 42.

Le moteur à combustion interne 1 comporte par ailleurs une ligne d'injection 60 de carburant dans les chambres de combustion 101. Cette ligne d'injection 60 comporte un réservoir 61 de carburant, une pompe d'injection 62 agencée pour prélever le carburant dans le réservoir 61 afin de le comprimer et un rail de distribution 63 permettant de répartir ce carburant vers quatre injecteurs (non représentés) débouchant respectivement dans les quatre chambres de combustion 101. La pompe d'injection 62 est également adaptée pour fournir une information de quantité de carburant Car injecté dans ledit moteur à combustion interne 1.

Pour piloter les différents organes du moteur à combustion interne 1, il est prévu un dispositif de gestion 70 d'un moteur à combustion interne. Ce dispositif de gestion 70 est un calculateur comportant un processeur (CPU) 71, une mémoire vive (RAM) 72, une mémoire morte (ROM) 73, des convertisseurs analogiques-numériques 74 et différentes interfaces d'entrée et de sortie.

Grâce à ces interfaces d'entrée et de sortie et à différents capteurs intégrés dans le moteur à combustion interne (capteur 108 de régime du moteur à combustion interne, pompe d'injection 62, le papillon d'admission d'air frais 23, la vanne EGR basse pression 42, la vanne d'admission 27, l'actionneur 35, le capteur d'admission 210). Ces différents capteurs intégrés 108, 62, 23, 42, 27, 35, 210 sont adaptés à délivrer des premiers paramètres de fonctionnement Rm, Car, $\alpha$, $\beta$, $\delta$, $\varepsilon$, $P_{Col\,mes}$ du moteur thermique 1 au dispositif de gestion 70. Les transmissions de ces différents paramètres sont représentées par des flèches en pointillés dirigées vers ledit dispositif de gestion 70. Le dispositif de gestion est également adapté à transmettre des informations de pilotage à certains organes du moteur à combustion interne 1, tels que la vanne d'admission 27 et/ou la vanne EGR basse pression 42. Les transmissions de ces informations de pilotage sont représentées par des flèches en pointillés partant du dispositif de gestion 70 et dirigés vers lesdits organes pilotés 27, 42.

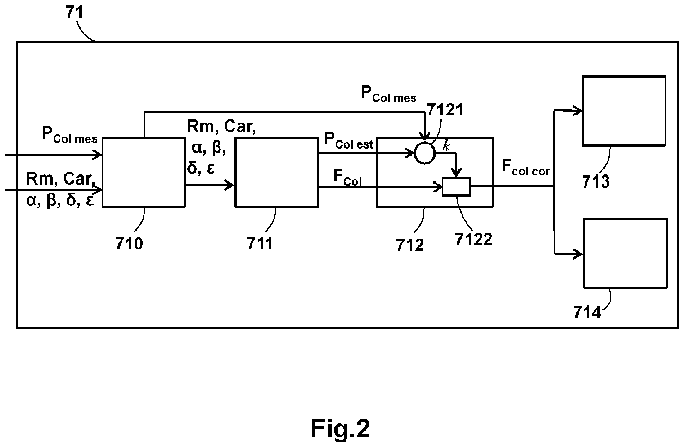

La figure 2 illustre le processeur 71 du dispositif de gestion 70. Ce processeur 71 comprend ici :

- des moyens de réception 710 ;
- un réseau de neurones 711 ;
- un filtre de Kalman étendu 712 ;
- des moyens de pilotage 713 ;
- des moyens d'estimation 714.

Les moyens de réception 710 sont adaptés à recevoir la pluralité des premiers paramètres de fonctionnement Rm, Car, $\alpha$, $\beta$, $\delta$, $\varepsilon$, du moteur à combustion interne 1 ainsi qu'un premier paramètre de référence, dit paramètre de référence mesuré $P_{Col\,mes}$ correspondant à la pression mesurée dans le collecteur d'admission 21 par le capteur d'admission 210. Les moyens de réception 710 sont adaptés pour transmettre la pluralité des premiers paramètres de fonctionnement Rm, Car, $\alpha$, $\beta$, $\delta$, $\varepsilon$ à un réseau de neurones 711. Les moyens de réception 710 sont également adaptés pour transmettre le paramètre de référence mesuré $P_{Col\,mes}$ à un filtre de Kalman étendu.

Le réseau de neurones 711 est adapté pour estimer au moins un second paramètre de fonctionnement du moteur à combustion interne 1 et un second paramètre de référence dit paramètre de référence estimé, à partir des premiers paramètres de fonctionnement Rm, Car, $\alpha$, $\beta$, $\delta$, $\varepsilon$. Le second paramètre de fonctionnement correspond ici à la fraction massique de gaz brulés $F_{Col}$ dans ledit collecteur d'admission 21. Le second paramètre de référence correspond à une pression estimée $P_{Col\,est}$ dans ledit collecteur d'admission 21. Le réseau de neurones 711 est ici un réseau de neurones récursifs. Plus particulièrement, ce réseau de neurones 711 comprend une couche de mémoire à court terme et au moins une couche pleinement connectée reliée à ladite couche de mémoire à court terme LSTM. La couche de mémoire à court terme permet de prédire des grandeurs intermédiaires (non physiques) qui sont ensuite consommées par la ou les couches pleinement connectée(s). La couche de mémoire à court terme permet de capturer les dynamiques du système et en particulier les dynamiques dans la production d'oxyde d'azote NOx. La ou les couche(s) pleinement connectée(s) consomme(nt) les sorties de la couche de mémoire à court terme, c'est-à-dire les grandeurs intermédiaires non physiques. Dans le cas où plusieurs couches pleinement connectées sont empilées, celles-ci échangent entre elles des grandeurs non physiques. Ces couches pleinement connectées permettent de capturer les non linéarités de la production d'oxyde d'azote en combinant les effets des entrées. La sortie de la dernière couche pleinement connectée va permettre de modéliser les émissions d'oxyde d'azote.

Le réseau de neurone 711 est ainsi perçu comme un modèle classique d'état, mais en non linéaire. Dans un premier temps, on prédit des états internes X du réseau de neurones et dans un second temps on prédit des grandeurs de sortie Y. On a ainsi le système d'équations suivant :

$$\frac{\partial X}{\partial t} = f(X, u)$$

$$Y = g(X, u)$$

où X sont les états internes, u les entrées du système et Y les sorties. $\frac{\partial X}{\partial t}$ est la dérivée temporelle des états X. Les fonctions f et g sont des fonctions non linéaires qui sont le modèle du phénomène à modéliser. Le réseau de neurones 711 va prédire les états X et les sorties Y à partir des entrées u.

L'association de ces couches de neurones permet de prendre en compte les phénomènes de retard et les phénomènes assez non linéaires grâce notamment aux fonctions et aux portes d'oublis de la couche de mémoire à court terme. Il est ainsi aisé d'extraire de ce réseau de neurones 711 un linéarisé à chaque instant. En effet, le réseau de neurones 711 forme un modèle non linéaire mais ses coefficients sur un point de fonctionnement peuvent être remis sous la forme d'un modèle d'état linéaire dans lequel : $\frac{\partial X}{\partial t} = A*X + B*u$ où A et B sont les matrices du modèle extrait de ce réseau de neurones 711 avec $A = \frac{\partial h_t}{\partial h_{t-1}}$, $B = \frac{\partial h_t}{\partial u_t}$, où $h_t$ représente un état caché à un instant t. De plus les sorties Y s'écrivent selon l'équation Y=C*X+D*u où C et D sont également des matrices. La linéarisation se fait à la volée grâce aux propriétés du réseau de neurones 711.

Dans un mode de réalisation particulier, le réseau de neurones 711 comprend une première couche de mémoire à court terme comprenant 33 neurones. Cette couche de neurones est adaptée pour traiter des séquences d'information de 5 à 10 secondes. En effet, chaque porte a des paramètres qui permettent de l'ouvrir et de la fermer afin de réaliser des opérations de type gain sur le signal. L'effet dynamique le plus lent est défini par la longueur de la séquence la plus longue. Dans ce mode de réalisation, le réseau de neurones 711 comprend également une seconde couche pleinement connectée et une troisième couche pleinement connectée. La seconde couche et la troisième couche comprennent respectivement 33 neurones.

Concernant l'apprentissage du réseau de neurones 711, la couche de mémoire à court terme est adaptée pour apprendre à partir d'un modèle physique ou directement à partir d'essais. Dans le cas d'un apprentissage dit hors ligne, la méthode d'apprentissage peut être réalisée en trois étapes. Dans une première étape, on construit et on identifie un modèle physique de type 0D à partir d'essais sur un banc moteur ou sur un véhicule. Un modèle 0D est un modèle à zéro dimension spatiale, seul le temps est pris en compte. Un tel modèle physique est par exemple réalisé avec l'outil AMESim. Ce modèle devient alors une référence et il est validé sur des essais stabilisés et transitoires tels qu'un cycle de roulage de type WLTC ou RDE.

Dans une seconde étape, un plan d'expérience numérique dynamique est réalisé sur ce modèle 0D. Cela permet de tester un grand nombre de combinaisons et de disposer d'une base d'apprentissage plus large qu'avec seulement des essais physiques. On peut ainsi réaliser des essais en limite de fonctionnement moteur, ce qui n'est pas possible à réaliser sur un vrai banc moteur du fait des risques de casse. A partir de ces essais virtuels aux limites, il est possible de faire apprendre au réseau de neurones de ne pas aller au-delà de ces limites. Par exemple, le réseau de neurones peut apprendre de ne pas dépasser la contrainte de vitesse maximale du turbocompresseur. En outre dans le modèle 0D, il est possible d'ajouter des règles métiers qui seront ensuite apprises par le réseau de neurones.

Dans une troisième étape, on réalise l'apprentissage de la couche de mémoire à court terme du réseau de neurones après avoir normalisé ou standardisé les entrées/sorties du modèle 0D. Cet apprentissage se fait par décomposition de séquences et par définition d'une architecture de la couche de mémoire à court terme. Les essais réels ou virtuels sont des roulages, des manoeuvres, des cycles normatifs (de type NEDC, WLTC, RDE...). Ces cycles sont découpés en séquences qui sont de l'ordre de 5 à 10 secondes. Pour réaliser ces séquences, des solveurs de type ADAM peuvent être utilisés.

Cette méthodologie proposée en 3 étapes fait intervenir au départ un modèle physique pour précalibrer le réseau de neurones 711. En alimentant ensuite l'algorithme d'apprentissage du réseau de neurones avec des essais virtuels, on couvre plus largement le domaine d'opération. Utiliser uniquement des essais réels serait trop onéreux avec des risques de casse moteur.

Le réseau de neurones 711 transmet ensuite à un filtre de Kalman étendu au moins un second paramètre de fonctionnement et un second paramètre de référence, dit paramètre de référence estimé. Ce second paramètre de fonctionnement est choisi parmi une seconde liste de paramètres de fonctionnement comprenant :

- une température $T_{Col}$ dans ledit collecteur d'admission 21;
- une fraction massique de gaz brulés $F_{Col}$ dans ledit collecteur d'admission 21 ;
- un débit d'air frais $Q_{Air}$ ;
- un débit dans la vanne EGR $Q_{EGR}$;
- une pression dans un collecteur d'échappement $P_{Echap}$ ;
- une température dans ledit collecteur d'échappement $T_{Echap}$ ;
- une pression Pc dans un volume d'une conduite avant un compresseur 24 du turbocompresseur ;

- une fraction massique de gaz brulés Fc dans ledit volume avant le compresseur 24 dudit turbocompresseur.

Dans le mode de réalisation de la figure 2, le second paramètre de fonctionnement transmis par le réseau de neurones 711 est la fraction massique de gaz brulés $F_{Col}$ dans le collecteur d'admission 21 et le second paramètre de référence transmis est une pression estimée $P_{Col\,est}$ dans ledit collecteur d'admission 21. Le filtre de Kalman étendu permet de corriger des grandeurs non mesurables telles que la fraction massique de gaz brulés dans le collecteur d'admission 21 en rebouclant cette correction sur une mesure maitrisée telle que la mesure de la pression $P_{Col\,mes}$ dans le collecteur d'admission 21. Le filtre de Kalman étendu 712 fonctionne en deux phases. Une première phase est une phase de prédiction qui comprend la résolution des équations suivantes :

$$Xp = A*X + B*u$$

(estimation de l'état prévu)

$$Pp = A*P*A' + Q$$

(estimation de la covariance prévue)

Dans une seconde phase de correction, le filtre de Kalman étendu 712 comprend la résolution des équations suivantes :

$$Y = Z - H*Xp$$

(innovation ou mesure résiduelle)

$$S = H*Pp*H' + R$$

(innovation ou mesure de la covariance)

$$K = Pp*H'*S\text{^}-1$$

(Gain de Kalman quasi optimal)

$$X = Xp + K*Y$$

(estimation de l'état mise à jour)

$$P = (I - K*Y) * Pp$$

(estimation de la covariance mise à jour)

Dans ces équations :

- A et B sont les matrices du modèle extrait du réseau de neurones 711 ;
- Xp et X sont les états du filtre de Kalman étendu aux instants t+1 et t ;
- Pp et P sont les matrices de covariance aux instants t+1 et t ;
- Z est la mesure de rebouclage (la mesure de la pression $P_{Col\,mes}$) ;
- H est le modèle de capteur à partir des états X ;
- Q et R sont des matrices de réglage dans lesquelles interviennent des notions de bruit de mesure et de modélisation ;

  - I est une matrice identité ayant des 1 sur la diagonale et des valeurs nulles dans le reste de ladite matrice.

Les seuls paramètres à calibrer dans le filtre de Kalman étendu 712 sont les matrices Q et R. R est la matrice qui se rapporte à un bruit de modélisation. Cette matrice est calibrée en fonction de l'estimation de la précision du modèle. Etant donné que le modèle est normalisé ou standardisé, c'est-à-dire que toutes les valeurs sont entre -1 et 1, la matrice R se limite à une matrice diagonale avec un coefficient multiplicatif à calibrer. Ce coefficient de la matrice R est déterminé de manière empirique. On part ainsi d'une valeur initiale d'une première application du même estimateur et on l'affine afin de maximiser la convergence vis-à-vis des essais réels. On notera également que R est une image de la précision des mesures sur le moteur thermique de la même manière que la pression mesurée Pcol dans le collecteur d'admission qui remonte dans le filtre de Kalman étendu. Q est une matrice qui se rapporte au bruit de mesure et qui se calibre en fonction du niveau de précision des capteurs. Par exemple, pour le capteur d'admission 210 qui mesure la pression d'admission $P_{Col\,mes}$ dans le collecteur d'admission 21, il est possible de faire l'hypothèse d'une précision de +/- 5%.

Dit autrement, le filtre de Kalman étendu 712 comprend des moyens de comparaison 7121 et des moyens de correction 7122. Les moyens de comparaisons 7121 sont adaptés pour réaliser une comparaison entre le paramètre de référence mesuré $P_{Col\,mes}$, transmis par les moyens de réception 710, et le paramètre de référence estimé $P_{Col\,est}$ transmis par le réseau de neurones 711. Cette comparaison permet de déterminer un gain de correction k. A partir de ce gain de correction k, des moyens de correction 7122 sont adaptés pour corriger le second paramètre de fonctionnement $F_{Col}$ pour obtenir un second paramètre de fonctionnement corrigé $F_{Col\,cor}$. Le second paramètre de fonctionnement corrigé $F_{Col\,cor}$ est ensuite transmis à un moyen de pilotage 713. Ce moyen de pilotage est adapté pour transmettre des commandes à la vanne d'admission 27 et/ou à la vanne EGR 42 en fonction de second paramètre corrigé. Dans le mode de réalisation de la figure 2, le processeur 71 comprend également des moyens d'estimation 714. Ces moyens d'estimation 714 sont adaptés pour estimer, à partir du second paramètre corrigé, un troisième paramètre de fonctionnement tel qu'un niveau d'émission de polluants ou une température des gaz en sortie de la chambre de combustion pour prévenir de surchauffes au niveau de la turbine 33.

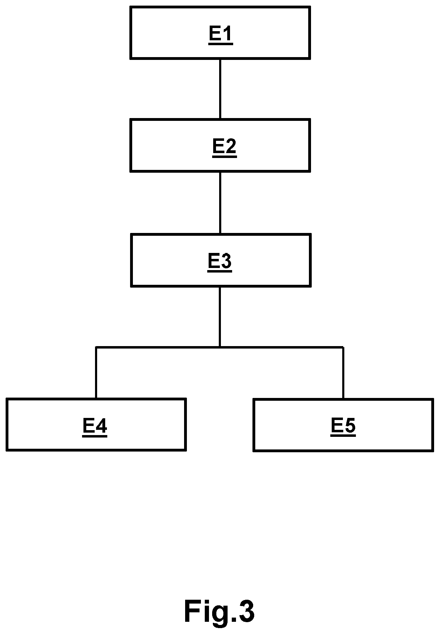

La figure 3 illustre un procédé de gestion d'un moteur à combustion interne 1 pour un véhicule automobile selon l'invention, ledit moteur à combustion interne 1 comportant une pluralité d'organes tels qu'un collecteur d'admission 21, au moins une chambre de combustion 101 et une vanne EGR 42. Le procédé de pilotage comporte :

- une étape de réception E1 d'une pluralité de premiers paramètres de fonctionnement Rm, Car, $\alpha$, $\beta$, $\delta$, $\epsilon$ dudit moteur à combustion interne 1 et d'un premier paramètre de référence dit paramètre de référence mesuré $P_{Col\ mes}$ ;

- à partir de tout ou partie de la pluralité de premiers paramètres de fonctionnement Rm, Car, $\alpha$, $\beta$, $\delta$, $\epsilon$ une étape d'estimation E2 par un réseau de neurones 711 d'au moins un second paramètre de fonctionnement $F_{Col}$ dudit moteur à combustion interne 1 et d'un second paramètre de référence, dit paramètre de référence estimé $P_{Col\ est}$ ;

- une étape de correction E3 par un filtre de Kalman étendu 712 du au moins second paramètre de fonctionnement $F_{Col}$ pour obtenir au moins un second paramètre de fonctionnement corrigé $F_{Col\ cor}$, ladite étape de correction comprenant une comparaison entre le paramètre de référence mesuré $P_{Col\ mes}$ et le paramètre de référence estimé $P_{Col\ est}$ pour déterminer un gain de correction k, la correction du au moins second paramètre de fonctionnement $F_{Col}$ étant fonction dudit gain de correction k ;

- à partir du au moins second paramètre de fonctionnement corrigé $F_{Col\ cor}$ :

  - une étape de pilotage E4 d'au moins un organe de la pluralité d'organes du moteur à combustion interne tel qu'une vanne d'admission 27 à l'entrée du collecteur d'admission 21 et/ou ladite vanne EGR 42 et/ou

  - une étape d'estimation E5 d'au moins un troisième paramètre de fonctionnement tel qu'un niveau d'émission de polluants ou une température des gaz en sortie de la chambre de combustion.

Dans un mode de réalisation préférentiel, le réseau de neurones 711 est un réseau de neurones récursifs. Avantageusement, le réseau de neurones récursifs 711 comprend une couche de mémoire à court terme.

Dans un mode de réalisation préférentiel, le réseau de neurones 711 comprend au moins une couche pleinement connectée reliée à ladite couche de mémoire à court terme.

L'étape de correction E3 est réalisée par un filtre de Kalman étendu 712.

Dans un mode de réalisation préférentiel, les premiers paramètres de fonctionnement sont choisis parmi une première liste de paramètres de fonctionnement comprenant :

- un régime du moteur à combustion interne Rm ;
- une quantité de carburant Car injecté dans ledit moteur à combustion interne 1 ;
- une position $\alpha$ d'un papillon d'admission d'air frais ;
- une position $\beta$ de la vanne EGR ;
- une position $\delta$ de la vanne d'admission à l'entrée du collecteur d'admission ;
- une position $\epsilon$ d'ailettes dans une turbine d'un turbocompresseur.

Dans un mode de réalisation préférentiel, le au moins un second paramètre de fonctionnement est choisi parmi une seconde liste de paramètres de fonctionnement comprenant :

- une température $T_{Col}$ dans ledit collecteur d'admission 21 ;
- une fraction massique de gaz brulés $F_{Col}$ dans ledit collecteur d'admission 21 ;
- un débit $Q_{Air}$ d'air frais ;
- un débit $Q_{EGR}$ dans la vanne EGR ;
- une pression $P_{Echap}$ dans un collecteur d'échappement ;
- une température $T_{Echap}$ dans ledit collecteur d'échappement ;
- une pression Pc dans un volume d'une conduite avant un compresseur 24 du turbocompresseur ;
- une fraction massique de gaz brulés Fc dans ledit volume avant le compresseur 24 dudit turbocompresseur.

Préférentiellement, le premier paramètre de référence est une pression mesurée $P_{Col\ mes}$ dans le collecteur d'admission 21 et le second paramètre de référence est une pression estimée $P_{Col\ est}$ dans ledit collecteur d'admission 21.

Un autre objet de l'invention concerne le moteur à combustion interne 1 comportant la vanne EGR 42 et le dispositif de gestion 70 dudit moteur à combustion interne 1.

Préférentiellement, le moteur à combustion interne 1 est un moteur à essence, notamment compatible avec les normes européennes d'émission Euro 7.

Préférentiellement, la vanne EGR 42 dudit moteur à combustion interne 1 est une vanne EGR basse pression.

Un autre objet de l'invention concerne un véhicule automobile comportant le moteur à combustion interne 1.

Ainsi, le paramètre de rebouclage du filtre de Kalman étendu pourrait être différent de la pression dans le collecteur. Ce paramètre de rebouclage pourrait être n'importe quel paramètre de la première liste de paramètres de fonctionnement.

Ainsi le paramètre corrigé pourrait être différent de la fraction massique des gaz brûlés dans le volume avant le compresseur 24. Ce paramètre corrigé pourrait être n'importe quel paramètre de la seconde liste de paramètres de fonctionnement.

Ainsi, l'étape d'apprentissage du réseau de neurone 711 n'est pas hors ligne mais directement embarqué dans le véhicule automobile.

Ainsi, le moteur à combustion interne est un moteur diesel comprenant une vanne EGR basse pression et une vanne EGR haute pression.

## Revendications

1. Procédé de gestion d'un moteur à combustion interne (1) pour un véhicule automobile, ledit moteur à combustion interne (1) comportant une pluralité d'organes tels qu'un collecteur d'admission (21), au moins un chambre de combustion (104), une vanne EGR (42), un turbocompresseur comprenant une turbine (33), ledit procédé de pilotage comportant :

   - une étape de réception (E1) d'une pluralité de premiers paramètres de fonctionnement (Rm, Car, $\alpha$, $\beta$, $\delta$, $\varepsilon$) dudit moteur à combustion interne (1) et d'un premier paramètre de référence dit paramètre de référence mesuré ($P_{Col\,mes}$) ;
   - à partir de tout ou partie de la pluralité de premiers paramètres de fonctionnement (Rm, Car, $\alpha$, $\beta$, $\delta$, $\varepsilon$), une étape d'estimation (E2) par un réseau de neurones (711) d'au moins un second paramètre de fonctionnement ($F_{Col}$) dudit moteur à combustion interne (1) et d'un second paramètre de référence, dit paramètre de référence estimé ($P_{Col\,est}$) ;
   - une étape de correction (E3) par un filtre de Kalman étendu (712) du au moins second paramètre de fonctionnement ($F_{Col}$) pour obtenir au moins un second paramètre de fonctionnement corrigé ($F_{Col\,cor}$), ladite étape de correction comprenant une comparaison entre le paramètre de référence mesuré ($P_{Col\,mes}$) et le paramètre de référence estimé ($P_{Col\,est}$) pour déterminer un gain de correction (k), la correction du au moins second paramètre de fonctionnement ($F_{Col}$) étant fonction dudit gain de correction (k) ;
   - à partir du au moins second paramètre de fonctionnement corrigé ($F_{Col\,cor}$) :

      - une étape de pilotage (E4) d'au moins un organe de la pluralité d'organes du moteur à combustion interne tel qu'une vanne d'admission (27) à l'entrée du collecteur d'admission (21) et ladite vanne EGR (42) ; et
   - une étape d'estimation (E5) d'au moins un troisième paramètre de fonctionnement tel qu'une température des gaz en sortie de la chambre de combustion pour prévenir de surchauffes au niveau de la turbine (33).

2. Procédé de gestion selon la revendication 1, dans lequel le réseau de neurones (711) est un réseau de neurones récursifs.

3. Procédé de gestion selon la revendication 2, dans lequel le réseau de neurones récursifs (711) comprend une couche de mémoire à court terme (LSTM).

4. Procédé de gestion selon la revendication 3, dans lequel le réseau de neurones (711) comprend au moins une couche pleinement connectée reliée à ladite couche de mémoire à court terme.

5. Procédé de gestion selon l'une quelconque des revendications 1 à 4, dans lequel les premiers paramètres de fonctionnement sont choisis parmi une première liste de paramètres de fonctionnement comprenant :

   - un régime du moteur à combustion interne (Rm) ;
   - une quantité de carburant (Car) injecté dans ledit moteur à combustion interne (1) ;
   - une position ($\alpha$) d'un papillon d'admission d'air frais ;
   - une position ($\beta$) de la vanne EGR ;
   - une position ($\delta$) de la vanne d'admission à l'entrée du collecteur d'admission ;
   - une position ($\varepsilon$) d'ailettes dans une turbine d'un turbocompresseur.

6. Procédé de gestion selon la revendication 5, dans lequel le au moins un second paramètre de fonctionnement est choisi parmi une seconde liste de paramètres de fonctionnement comprenant :

   - une température ($T_{Col}$) dans ledit collecteur d'admission (21) ;
   - une fraction massique de gaz brulés ($F_{Col}$) dans ledit collecteur d'admission (21) ;
   - un débit d'air frais ($Q_{Air}$) ;
   - un débit dans la vanne EGR ($Q_{EGR}$) ;
   - une pression dans un collecteur d'échappement ($P_{Echap}$) ;
   - une température dans ledit collecteur d'échappement ($T_{Echap}$) ;
   - une pression (Pc) dans un volume d'une conduite avant un compresseur (24) du turbocompresseur ;

- une fraction massique de gaz brulés (Fc) dans ledit volume avant le compresseur (24) dudit turbocompresseur.

7. Procédé de gestion selon l'une quelconque des revendications 1 à 6, dans lequel le premier paramètre de référence est une pression mesurée ($P_{Col\,mes}$) dans le collecteur d'admission (21) et le second paramètre de référence est une pression estimée ($P_{Col\,est}$) dans ledit collecteur d'admission (21).

8. Dispositif de gestion d'un moteur à combustion interne pour un véhicule automobile, ledit moteur à combustion interne (1) comportant une pluralité d'organes tels qu'un collecteur d'admission (21), au moins un chambre de combustion (101), une vanne EGR (42), un turbocompresseur comprenant une turbine (33), ledit dispositif de gestion comportant :

   - des moyens de réception (710) d'une pluralité de premiers paramètres de fonctionnement (Rm, Car, $\alpha$, $\beta$, $\delta$, $\varepsilon$) dudit moteur à combustion interne (1) et d'un premier paramètre de référence dit paramètre de référence mesuré ($P_{Col\,mes}$) ;
   - un réseau de neurones (711) pour estimer, à partir de tout ou partie de la pluralité de premiers paramètres de fonctionnement (Rm, Car, $\alpha$, $\beta$, $\delta$, $\varepsilon$), au moins un second paramètre de fonctionnement ($F_{Col}$) dudit moteur à combustion interne (1) et un second paramètre de référence, dit paramètre de référence estimé ($P_{Col}$ est) ;
   - un filtre de Kalman étendu (712) pour corriger le au moins second paramètre de fonctionnement ($F_{Col}$) en vue d'obtenir au moins un second paramètre de fonctionnement corrigé ($F_{Col\,cor}$), ledit filtre (712) étant adapté pour faire une comparaison entre le paramètre de référence mesuré ($P_{Col\,mes}$) et le paramètre de référence estimé ($P_{Col\,est}$) en vue de déterminer un gain de correction (k), la correction du au moins second paramètre de fonctionnement ($F_{Col}$) étant fonction dudit gain de correction (k) ;
   - des moyens de pilotage (713) d'au moins un organe de la pluralité d'organes du moteur à combustion interne tel que ladite vanne d'admission (27) à l'entrée du collecteur d'admission (21) et ladite vanne EGR (42), à partir du au moins second paramètre de fonctionnement corrigé ($F_{Col\,cor}$) ; et
   - des moyens d'estimation (714) d'au moins un troisième paramètre de fonctionnement tel qu'une température des gaz en sortie de la chambre de combustion (1), à partir du au moins second paramètre de fonctionnement corrigé ($F_{Col\,cor}$) pour prévenir de surchauffes au niveau de la turbine (33).

9. Dispositif de gestion selon la revendication 8, dans lequel le réseau de neurones (711) est un réseau de neurones récursifs.

10. Dispositif de gestion selon la revendication 9, dans lequel le réseau de neurones récursifs (711) comprend une couche de mémoire à court terme (LSTM).

11. Dispositif de gestion selon la revendication 9, dans lequel le réseau de neurones (711) comprend au moins une couche pleinement connectée reliée à ladite couche de mémoire à court terme (LSTM).

12. Moteur à combustion interne comportant une vanne EGR (42) et un dispositif de gestion dudit moteur à combustion interne (1) selon l'une quelconque des revendications 8 à 11.

13. Moteur à combustion interne selon la revendication 12 dans lequel ledit moteur à combustion interne (1) est un moteur à essence.

14. Moteur à combustion interne selon l'une quelconque des revendications 12 ou 13, dans lequel la vanne EGR (42) dudit moteur à combustion interne est une vanne EGR basse pression.

15. Véhicule automobile comportant un moteur à combustion interne (1) selon l'une quelconque des revendications 13 ou 14.

**Patentansprüche**

1. Verfahren zum Überwachen eines Verbrennungsmotors (1) für ein Kraftfahrzeug, wobei der Verbrennungsmotor (1) eine Vielzahl von Elementen, wie einen Einlasskrümmer (21), mindestens eine Brennkammer (104), ein AGR-Ventil (42), einen Turboverdichter, umfassend eine Turbine (33), umfasst, wobei das Steuerverfahren aufweist:

   - einen Schritt (E1) eines Empfangens einer Vielzahl von ersten Betriebsparametern (Rm, Car, $\alpha$, $\beta$, $\delta$, $\varepsilon$) des Verbrennungsmotors (1) und eines ersten Referenzparameters, der als gemessener Referenzparameter ($P_{Col\,gemess}$) bezeichnet wird;
   - aus sämtlichen oder einem Teil der Vielzahl von ersten Betriebsparametern (Rm, Car, $\alpha$, $\beta$, $\delta$, $\varepsilon$) einen Schritt (E2) eines Schätzens durch ein neuronales Netz (711) von mindestens einem zweiten Betriebsparameter ($F_{Col}$) des Verbrennungsmotors (1) und einem zweiten Referenzparameter, der als geschätzter Referenzparameter ($P_{Col\,geschä}$) bezeichnet wird;
   - einen Schritt eines Korrigierens (E3) mindestens des zweiten Betriebsparameters ($F_{Col}$)

durch ein erweitertes Kalmanfilter (712), um mindestens einen zweiten korrigierten Betriebsparameter ($F_{Col\ korrig}$) zu erhalten, wobei der Korrekturschritt einen Vergleich zwischen dem gemessenen Referenzparameter ($P_{Col\ gemess}$) und dem geschätzten Referenzparameter ($P_{Col\ geschä}$) umfasst, um eine Korrekturverstärkung (k) zu bestimmen, wobei die Korrektur mindestens des zweiten Betriebsparameters ($F_{Col}$) abhängig von der Verstärkungskorrektur (k) ist;
- aus mindestens dem zweiten korrigierten Betriebsparameter ($F_{Col\ korrig}$):
- einen Schritt des Steuerns (E4) mindestens eines Elements der Vielzahl von Elementen des Verbrennungsmotors, wie eines Einlassventils (27) an dem Eingang des Einlasskrümmers (21) und des EGR-Ventils (42); und
- einen Schritt des Schätzens (E5) mindestens eines dritten Betriebsparameters, wie einer Temperatur von Gasen, die die Brennkammer verlassen, um Überhitzungen an der Turbine (33) zu verhindern.

2. Überwachungsverfahren nach Anspruch 1, wobei das neuronale Netz (711) ein rekursives neuronales Netz ist.

3. Überwachungsverfahren nach Anspruch 2, wobei das rekursive neuronale Netz (711) eine Kurzzeitgedächtnisschicht (LSTM) umfasst.

4. Überwachungsverfahren nach Anspruch 3, wobei das neuronale Netz (711) mindestens eine vollständig verbundene Schicht umfasst, die mit der Kurzzeitgedächtnisschicht verknüpft ist.

5. Überwachungsverfahren nach einem der Ansprüche 1 bis 4, wobei die ersten Betriebsparameter aus einer ersten Liste von Betriebsparametern ausgewählt werden, umfassend:

    - eine Drehzahl des Verbrennungsmotors (Rm);
    - eine Kraftstoffmenge (Car), die in den Verbrennungsmotor (1) eingespritzt wird;
    - eine Position ($\alpha$) einer Frischlufteinlassklappe;
    - eine Position ($\beta$) des AGR-Ventils;
    - eine Position ($\delta$) des Einlassventils an dem Eingang des Einlasskrümmers;
    - eine Position ($\epsilon$) von Schaufeln in einer Turbine eines Turboverdichters.

6. Überwachungsverfahren nach Anspruch 5, wobei der mindestens eine zweite Betriebsparameter aus einer zweiten Liste von Betriebsparametern ausgewählt wird, umfassend:

    - eine Temperatur ($T_{Col}$) in dem Einlasskrümmer (21);

    - einen Massenanteil von Auspuffgasen ($F_{Col}$) in dem Einlasskrümmer (21);
    - einen Frischluftstrom ($Qi\_uft$);
    - einen Strom in dem AGR-Ventil ($Q_{AGR}$);
    - einen Druck in einem Abgaskrümmer ($P_{Abgas}$);
    - eine Temperatur in dem Abgaskrümmer ($T_{Abgas}$);
    - einen Druck (Pc) in einem Volumen einer Leitung vor einem Verdichter (24) des Turboverdichters;
    - einen Massenanteil von Auspuffgasen (Fc) in dem Volumen vor dem Verdichter (24) des Turboverdichters.

7. Überwachungsverfahren nach einem der Ansprüche 1 bis 6, wobei der erste Referenzparameter ein gemessener Druck ($P_{Col\ gemess}$) in dem Einlasskrümmer (21) und der zweite Referenzparameter ein geschätzter Druck ($P_{Col\ geschä}$) in dem Einlasskrümmer (21) ist.

8. Vorrichtung zum Überwachen eines Verbrennungsmotors für ein Kraftfahrzeug, wobei der Verbrennungsmotor (1) eine Vielzahl von Elementen, wie einen Einlasskrümmer (21), mindestens eine Brennkammer (101), ein AGR-Ventil (42), einen Turboverdichter, umfassend eine Turbine (33), umfasst, wobei die Überwachungsvorrichtung aufweist:

    - Mittel (710) des Empfangens einer Vielzahl von ersten Betriebsparametern (Rm, Car, $\alpha$, $\beta$, $\delta$, $\epsilon$) des Verbrennungsmotors (1) und eines ersten Referenzparameters, der als gemessener Referenzparameter ($P_{Col\ gemess}$) bezeichnet wird;
    - ein neuronales Netz (711) zum Schätzen, aus sämtlichen oder einem Teil der Vielzahl von ersten Betriebsparametern (Rm, Car, $\alpha$, $\beta$, $\delta$, $\epsilon$), mindestens eines zweiten Betriebsparameters ($F_{Col}$) des Verbrennungsmotors (1) und eines zweiten Referenzparameters, der als geschätzter Referenzparameter ($P_{Col\ geschä}$) bezeichnet wird;
    - ein erweitertes Kalmanfilter (712), um mindestens den zweiten Betriebsparameter ($F_{Col\ korrig}$) im Hinblick auf das Erhalten eines zweiten korrigierten Betriebsparameters ($F_{Col\ korrig}$) zu korrigieren, wobei das Filter (712) angepasst ist, um einen Vergleich zwischen dem gemessenen Referenzparameter ($P_{Col\ gemess}$) und dem geschätzten Referenzparameter ($P_{Col\ geschä}$) im Hinblick auf das Bestimmen einer Korrekturverstärkung (k) vorzunehmen, wobei die Korrektur mindestens des zweiten Betriebsparameters ($F_{Col}$) abhängig von der Verstärkungskorrektur (k) ist;
    - Mittel (713) des Steuerns von mindestens einem Element der Vielzahl von Elementen des Verbrennungsmotors, wie dem Einlassventil (27) an dem Eingang des Einlasskrümmers (21) und dem AGR-Ventil (42), aus dem an mindestens zweiten korrigierten Betriebsparameter ($F_{Col\,korrig}$), und
- Mittel (714) des Schätzens mindestens eines dritten Betriebsparameters, wie einer Temperatur der Gase, die die Brennkammer (1) verlassen, aus mindestens dem zweiten korrigierten Betriebsparameter ($F_{Col\,korrig}$), um Überhitzungen an der Turbine (33) zu verhindern.

9. Überwachungsvorrichtung nach Anspruch 8, wobei das neuronale Netz (711) ein rekursives neuronales Netz ist.

10. Überwachungsvorrichtung nach Anspruch 9, wobei das rekursive neuronale Netz (711) eine Kurzzeitgedächtnisschicht (LSTM) umfasst.

11. Überwachungsvorrichtung nach Anspruch 9, wobei das neuronale Netz (711) mindestens eine vollständig verbundene Schicht umfasst, die mit der Kurzzeitgedächtnisschicht (LSTM) verknüpft ist.

12. Verbrennungsmotor, der ein AGR-Ventil (42) und eine Vorrichtung zur Überwachung des Verbrennungsmotors (1) nach einem der Ansprüche 8 bis 11 aufweist.

13. Verbrennungsmotor nach Anspruch 12, wobei der Verbrennungsmotor (1) ein Benzinmotor ist.

14. Verbrennungsmotor nach einem der Ansprüche 12 oder 13, wobei das AGR-Ventil (42) des Verbrennungsmotors ein Niederdruck-AGR-Ventil ist.

15. Kraftfahrzeug, das einen Verbrennungsmotor (1) nach einem der Ansprüche 13 oder 14 aufweist.

**Claims**

1. Method for managing an internal combustion engine (1) for a motor vehicle, the internal combustion engine (1) comprising a plurality of elements, such as an intake manifold (21), at least one combustion chamber (104), an EGR valve (42) and a turbocharger comprising a turbine (33), the control method comprising:

   - a step (E1) of receiving a plurality of first operating parameters (Rm, Car, $\alpha$, $\beta$, $\delta$, $\epsilon$) of the internal combustion engine (1) and a first reference parameter, which is referred to as the measured reference parameter ($P_{Col\,mes}$);
   - a step (E2) of estimating, by means of a neural network (711), at least one second operating parameter ($F_{Col}$) of the internal combustion engine (1) and a second reference parameter, which is referred to as the estimated reference parameter ($P_{Col\,est}$), from all or some of the plurality of first operating parameters (Rm, Car, $\alpha$, $\beta$, $\delta$, $\epsilon$);
   - a step (E3) of correcting, by means of an extended Kalman filter (712), the at least second operating parameter ($F_{Col}$) to obtain at least one corrected second operating parameter ($F_{Col\,cor}$), the correction step comprising a comparison between the measured reference parameter ($P_{Col\,mes}$) and the estimated reference parameter ($P_{Col\,est}$) to determine a correction gain (k), the correction of the at least second operating parameter ($F_{Col}$) being a function of the correction gain (k);
   - from the at least second corrected operating parameter ($F_{Col\,cor}$):
   - a step (E4) of controlling at least one element of the plurality of elements of the internal combustion engine, such as an intake valve (27) at the inlet to the intake manifold (21) and the EGR valve (42); and
   - a step (E5) of estimating at least one third operating parameter, such as a temperature
   of the gases leaving the combustion chamber to prevent overheating at the turbine (33).

2. Management method according to claim 1, wherein the neural network (711) is a recursive neural network.

3. Management method according to claim 2, wherein the recursive neural network (711) comprises a short-term memory layer (LSTM).

4. Management method according to claim 3, wherein the neural network (711) comprises at least one fully connected layer which is connected to the short-term memory layer.

5. Management method according to any of claims 1 to 4, wherein the first operating parameters are selected from a first list of operating parameters, comprising:

   - an internal combustion engine speed (Rm);
   - a quantity of fuel (Car) injected into the internal combustion engine (1);
   - a position ($\alpha$) of a fresh air intake throttle valve;
   - a position ($\beta$) of the EGR valve;
   - a position ($\delta$) of the intake valve at the inlet of the intake manifold;
   - a position ($\epsilon$) of vanes in a turbine of a turbocharger.

6. Management method according to claim 5, wherein the at least one second operating parameter is selected from a second list of operating parameters, comprising:

- a temperature ($T_{Col}$) in the intake manifold (21);
- a mass fraction of burnt gas ($F_{Col}$) in the intake manifold (21);
- a fresh air flow ($Q_{Air}$);
- a flow in the EGR valve ($Q_{EGR}$);
- a pressure in an exhaust manifold ($P_{Echap}$);
- a temperature in the exhaust manifold ($T_{Echap}$);
- a pressure (Pc) in a volume of a pipe before a compressor (24) of the turbocharger;
- a mass fraction of burnt gas (Fc) in the volume before the compressor (24) of the turbocharger.

7. Management method according to any of claims 1 to 6, wherein the first reference parameter is a measured pressure ($P_{Col\,mes}$) in the intake manifold (21) and the second reference parameter is an estimated pressure ($P_{Col\,est}$) in the intake manifold (21).

8. Device for managing an internal combustion engine for a motor vehicle, the internal combustion engine (1) comprising a plurality of elements, such as an intake manifold (21), at least one combustion chamber (101), an EGR valve (42) and a turbocharger comprising a turbine (33), the management device comprising:

- means (710) for receiving a plurality of first operating parameters (Rm, Car, $\alpha$, $\beta$, $\delta$, $\epsilon$) of the internal combustion engine (1) and a first reference parameter, which is referred to as the measured reference parameter ($P_{Col\,mes}$);
- a neural network (711) for estimating at least one second operating parameter ($F_{Col}$) of the internal combustion engine (1) and a second reference parameter, which is referred to as the estimated reference parameter ($P_{Col\,est}$) from all or some of the plurality of first operating parameters (Rm, Car, $\alpha$, $\beta$, $\delta$, $\epsilon$);
- an extended Kalman filter (712) for correcting the at least second operating parameter ($F_{Col}$) with a view to obtaining at least one corrected second operating parameter ($F_{Col\,cor}$), the filter (712) being suitable for making a comparison between the measured reference parameter ($P_{Col\,mes}$) and the estimated reference parameter ($P_{Col\,est}$) with a view to determining a correction gain (k), the correction of the at least one second operating parameter ($F_{Col}$) being a function of the correction gain (k);
- means (713) for controlling at least one element of the plurality of elements of the internal combustion engine, such as the intake valve (27) at the inlet to the intake manifold (21) and the EGR valve (42) from the at least second corrected operating parameter ($F_{Col\,cor}$); and
- means (714) for estimating at least one third operating parameter, such as a temperature of the gases leaving the combustion chamber (1), from the at least second corrected operating parameter ($F_{Col\,cor}$) to prevent overheating at the turbine (33).

9. Management device according to claim 8, wherein the neural network (711) is a recursive neural network.

10. Management device according to claim 9, wherein the recursive neural network (711) comprises a short-term memory layer (LSTM).

11. Management device according to claim 9, wherein the neural network (711) comprises at least one fully connected layer which is connected to the short-term memory layer (LSTM).

12. Internal combustion engine comprising an EGR valve (42) and a device for managing the internal combustion engine (1) according to any of claims 8 to 11.

13. Internal combustion engine according to claim 12, wherein the internal combustion engine (1) is a gasoline engine.

14. Internal combustion engine according to either of claims 12 or 13, wherein the EGR valve (42) of the internal combustion engine is a low-pressure EGR valve.

15. Motor vehicle comprising an internal combustion engine (1) according to either of claims 13 or 14.

**Fig.1**

71

$P_{Col\ mes}$
7121

$P_{Col\ mes}$

Rm, Car,
α, β,
δ, ε

$P_{Col\ est}$

$k$

$P_{Col\ mes}$

Rm, Car,
α, β, δ, ε

$F_{Col}$

$F_{col\ cor}$

710

711

712

7122

713

714

## Fig.2

**Fig.3**

**EP 4 176 165 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2981404

- US 5781700 A